(19) Europäisches Patentamt
European Patent Office
Office européen des brevets

(11) **EP 2 362 527 A1**

(12) **EUROPEAN PATENT APPLICATION**

(43) Date of publication:
**31.08.2011 Bulletin 2011/35**

(51) Int Cl.:
*H02K 3/28* (2006.01)   *H02K 7/18* (2006.01)
*F03D 7/02* (2006.01)

(21) Application number: **10154736.2**

(22) Date of filing: **25.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Goliath Wind Ltd.**
**11415 Tallinn (EE)**

(72) Inventor: **Spooner, Edward**
**Bishop Auckland, Durham DL13 1SL (GB)**

(74) Representative: **Sarap, Margus**
**Sarap & Partners Patent Agency**
**Riia 185A**
**51014 Tartu (EE)**

(54) **Wind turbine electrical brake**

(57)   A braking system for a wind turbine comprising an electrical generator excited by permanent magnets, said electrical generator comprising armature winding made of coil (1) comprising at least two conductor sections (2, 2'), that forms two or more winding paths that are connected in series for normal generator operation and an arrangement of switching means (A, B, C) or (A, B, C, D) to create an electrical short circuit to selected conductor sections of the armature windings coil (1).

Fig. 4

## Description

## Technical Field

The present invention is related with wind turbine technology especially with technology of braking the wind turbine with electrical brakes.

## Background Art

Large grid-connected wind turbines are required to provide brakes for safety. Alternative forms of brake include: friction brakes, either in disc or cylinder form, aerodynamic brakes and electrical brakes. For reasons of safety of maintenance staff and the public, it is essential that the brake operate reliably even if there has been a power failure. An electrical brake, in which the generator feeds power into a resistive load, is an economical option because it employs apparatus installed for the normal operation of the machine and does not require additional expensive or heavy components.

Electrical generators require a magnetic field to be present to cause induced voltages in the coils of the armature winding due to the relative motion of the rotor and stator. The magnetic field can be established in one of several ways: direct current passing through a field winding as in the case of a synchronous generator; alternating currents passing through a secondary winding as in the case of a doubly-fed generator; alternating currents of suitable phase passing through the armature winding as in the case of an induction generator; or by permanent magnets. Provision of the magnetic field is called excitation of the generator. Only in the case of permanent magnet excitation is it possible to guarantee that the excitation will be present and that the generator will function properly as a brake under all emergency circumstances when braking will be needed and power supplies may have failed.

A wind turbine which employs a permanent magnet generator may therefore employ the generator as the principle component of an electrical braking system. In addition to the generator, the system requires an electrical load of sufficient mass to absorb the kinetic energy of the rotating turbine that the generator converts to electrical form, without overheating. Furthermore, the load must be designed to withstand the high voltage that the generator normally produces. A suitable conventional resistive load bank would be a bulky and expensive component.

A further requirement for a braking system is that it must develop sufficient torque to ensure that the rotor is brought to a sufficiently low speed that a parking brake can be brought into service. The resistance of the load, necessary for the required torque to be developed, is a function of the rotational speed and the load bank may require control in the form of an electronic converter or a set of switches to be operated as the speed reduces during the braking operation. Initially when the speed is high, a high resistance is required but at lower speed a low resistance is needed. At very low speed a short circuit may be applied to the winding, in effect, to employ the resistance of the winding itself as the lowest possible value and bring the machine almost to rest.

The magnitude of the torque developed by a generator with resistive load is determined by the emf produced by the winding, the winding inductance and the total resistance of the winding and the load. A permanent-magnet generator produces a voltage that is proportional to the speed of rotation at a frequency that is also proportional to speed. The windings have resistance that is independent of speed and inductance that is also independent of speed. It is recognised that the resistance increases as the winding temperature rises and this must be taken account of in the design of the system.

## Summary of invention

Some large wind turbines employ low-speed electrical generators driven directly by the turbine rotor and in many cases the generator is excited by permanent magnets. Such generators have the necessary guaranteed excitation and they are designed to withstand the generated voltage. Furthermore, they are physically large machines and so the armature windings have sufficient mass to absorb the energy generated during braking. In these cases it would be possible to use the generator windings as a braking resistor if the winding resistance could be increased and controlled suitably. The resulting system would be especially attractive because it is inherently fail safe and requires no additional equipment.

According to the invention the winding is short-circuited so that the generator provides braking torque. The magnitude of the braking torque is adjusted by switches that disconnect selected parts of the winding so that the remaining parts have suitable values of emf, inductance and resistance. As the speed reduces under the influence of the braking torque, the switches are operated to modify the winding resistance so that sufficient torque continues to be produced.

## Brief description of drawings

The present invention will be described below in details by explaining the physical principle of the electrical brakes and later opening the essence of the present invention with references to the accompanied drawings where in the

Figure 1 is illustrated the torque varies with speed in a typical braking characteristic for a generator with short circuit;

Figure 2 is illustrated the torque varies with speed as shown in Fig 1 where the corresponding turbine characteristic (dotted line) is included;

Figure 3 is compared the turbine drive characteristic with a generator braking characteristic in which the winding resistance has been increased;

Figure 4 shows an electric circuit diagram for a preferred embodiment of the invention;

Fig 5 shows the circuit diagram for a second embodiment in which the generator has an airgap winding assembled from a set of coils;

Figure 6 illustrates an airgap winding assembled from a set of coils laid on the surface of a stator and which have electrical circuit corresponding to Figure 5;

Figure 7 compares the braking characteristics obtained by applying a short circuit to complete coils;

Figure 8 illustrates a third embodiment in which the armature winding is located within slots in a laminated stator;

Figure 9 illustrates a fourth embodiment in which the armature winding is an airgap winding with coils of two-layer strip-wound form with layers of conductor strip of different cross section.

**Description of embodiments**

<u>Physical principle</u>
The torque developed by the generator acting as a brake should exceed the torque produced by the turbine blades. The maximum torque that the permanent-magnet generator can produce is derived as follows:
$$E = k\Omega$$

The emf, E, in each coil is proportional to speed, $\Omega$ (radian/sec).
The inductive reactance of the coil, X, is proportional its inductance, L, and to the electrical frequency, $\omega$ (electrical rad/sec) which, in turn, is also proportional to speed, $\omega = p\Omega$, where p is the number of magnetic pole pairs of the generator field system
$$X = L\omega = pL\Omega$$

If the generator terminals have been short circuited then the voltage at the terminals of each coil is zero and the current, I, is determined simply by the impedance and the emf. The impedance, Z, of each coil is the combination of resistance, r, and reactance, X:
$$Z = \sqrt{r^2 - X^2}$$

The current in each coil is
$$I = E/Z$$

The power dissipated in the coil is
$$P = I2R$$

The dissipated power corresponds to a contribution to the torque of
$$T = P/\Omega$$

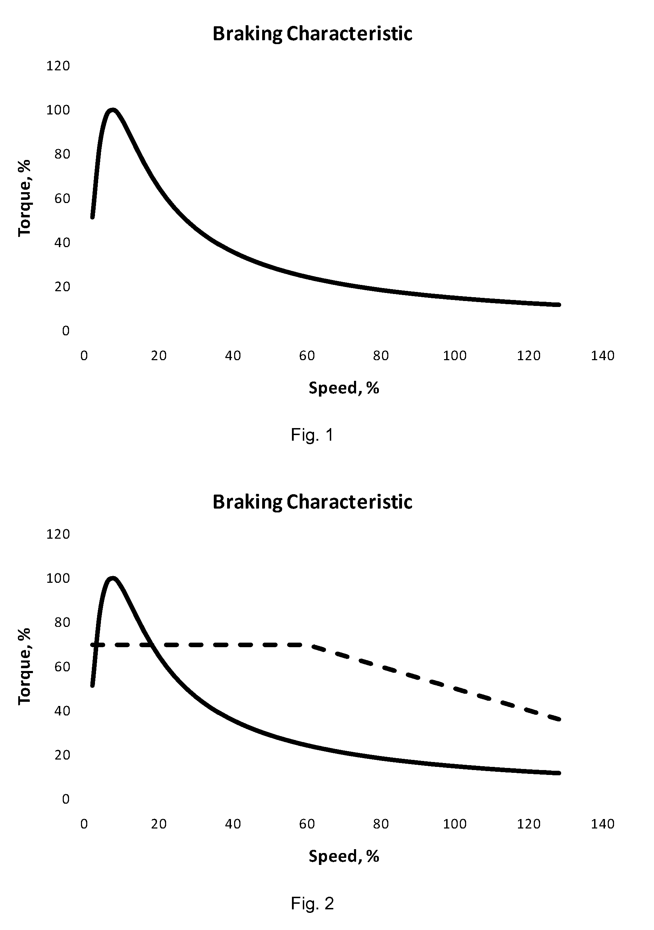

The torque varies with speed according to the above relationships in a typical manner illustrated in Figure 1. 100% speed corresponds to the rated operating speed of the turbine and 100% torque corresponds to the maximum torque that can be produced by the generator with its unmodified winding connected to a short circuit. In the low speed section of the characteristic (continuous line) the frequency is low and the impedance is dominated by the winding resistance. At high speeds the impedance is dominated by the inductive reactance and the current tends toward a constant value equal to $k/pL$. The power dissipated in each coil tends to the constant value $k^2R/p^2L^2$ and the torque therefore tends toward an inverse relationship with speed.

Figure 2 compares this electrical braking characteristic (continuous line) with an idealised torque vs speed characteristic (dotted line) for the turbine showing the normal operating region and the low speed region where the blades are aerodynamically stalled. It can be appreciated that if braking is demanded whilst the rotor is turning at high speed then the electrical brake with simple short-circuit windings cannot develop sufficient torque to overcome the turbine driving torque and the turbine will continue to rotate. This arrangement is not suitable for use at speeds higher than about 20% of rated speed in the example depicted. However, it can be seen that if the speed can be reduced before the short circuit is applied then the braking torque exceeds the drive torque down to a very low speed and it will bring the machine almost to rest so that a light duty parking brake can be applied.

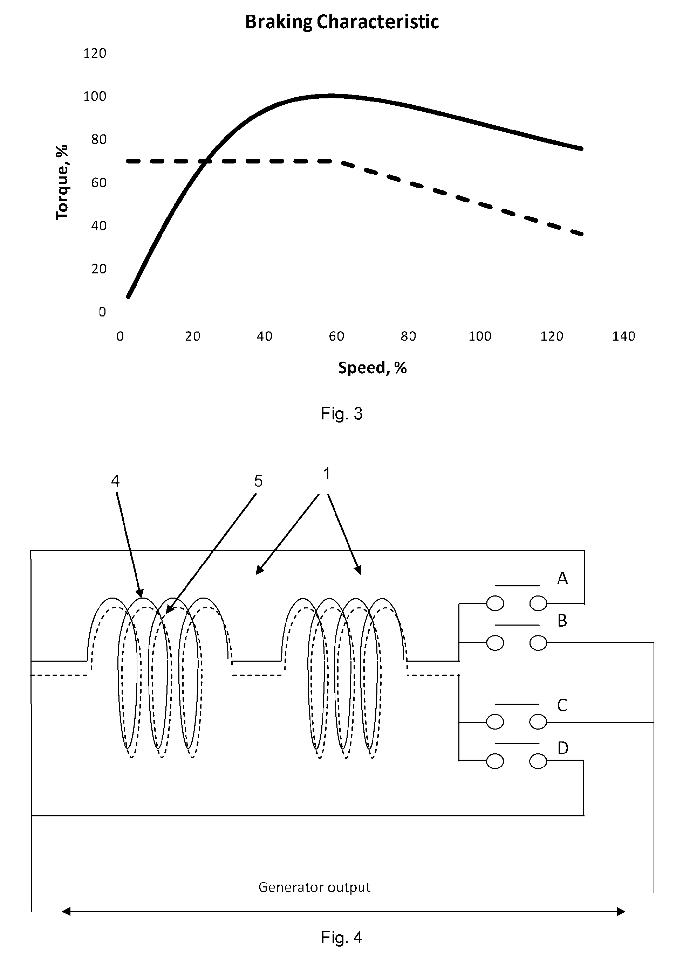

Figure 3 compares the turbine drive characteristic (dotted line) with a generator braking characteristic (continuous line) in which the winding resistance has been increased. In this case the brake torque exceeds the drive torque even for speeds above rated. However, as speed reduces the system comes to equilibrium at a rather higher speed than in the case depicted in Figure 2. It is noteworthy that the maximum braking torque is the same in each case.

Figure 4 shows an electric circuit diagram for a preferred embodiment of the invention. The circuit of Figure 4 applies separately to each phase of a polyphase generator. Each coil 1 within the generator winding is wound using a conductor that comprises sub-conductors 4, 5 which are physically close to each other. Figure 4 shows two coils 1 connected in series, each having two sub conductors, 4 and 5, but the winding may consist of other numbers of coils or only one. Where there are two or more, the series connection should preferably not create a connection between the sub conductors. Also, there may be more than two sub conductors, and they may be of the same or different cross sectional area.

Under normal operation the two paths are connected to the generator output terminals by maintaining switches B and C closed and switches A and D open. The generator operates with all the sub conductors in parallel, giving the minimum possible winding resistance and the maximum efficiency.

To initiate braking from high speed, switches B and C are opened and switch A or D is closed. The generator now has a short circuit applied to its terminals and its winding has a small cross sectional area so the resistance is high. The generator now has a characteristic of the form of Figure 3 and it causes the speed to decrease to a safe value.

When the speed has reduced to a certain value, switch D may be closed so that the winding has all of its sub conductors in parallel and the resistance is low so that the speed is reduced to a very low value.

The switches A, B, C and D are preferably arranged so that when their control circuits are de energised they revert to the condition that has high effective resistance which brings the speed down to a safe value. This arrangement ensures fail safe operation of the electrical brake.

In this embodiment, the sub conductors are in close proximity so that the whole winding mass is available to absorb energy and the temperature rise should be quite modest.

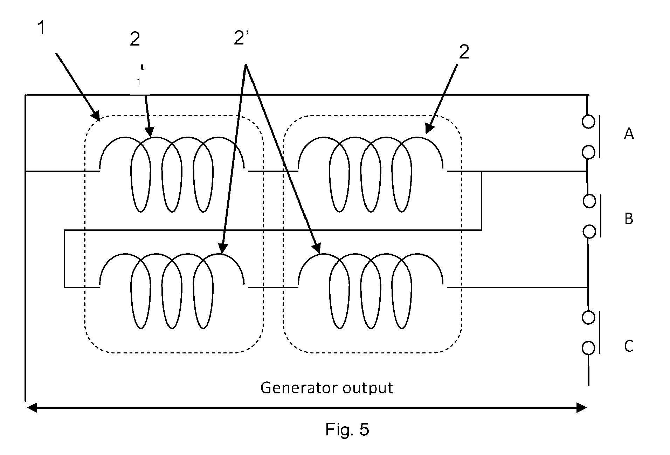

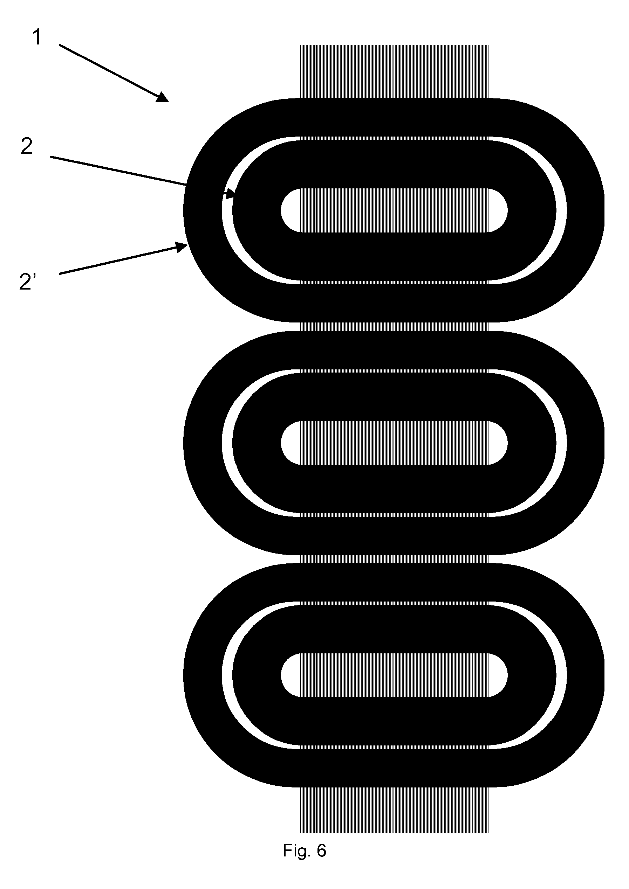

Figure 5 shows the circuit diagram for a second embodiment in which the generator has an airgap winding assembled from a set of coils laid on the surface of a stator as illustrated in Figure 6. Each coil 1 comprises two sections 2 and 2'. The coils 1 comprising each electrical phase of the generator are connected with their inner parts, 2, all in series and their outer parts, 2', also in series. For normal operation, switch C is maintained closed and switches A and B are maintained open. The generator output is produced by the entire set of winding sections so that the efficiency in normal operation is unaffected. For high speed braking, the switch C is opened and a short circuit is applied to the section comprising preferably the inner sections of the coils by closing switch A. The braking characteristic is determined by the emf, resistance and inductance of the short circuit part of the winding. When the speed has reduced to a predetermined value the rest of the winding is short circuited by closing switch B. Unlike the first embodiment which causes only the resistance to be modified by the operation of the switches, in this embodiment all parameters are affected.

The emf is reduced because the number of turns in the shorted portion of each coil is smaller than in the complete coil. The effective area of the average turn is also different so the maximum flux linking each turn is changed.

The inductance is related to the square of the number of turns and to the area of the turns and so the inductance is reduced. Having fewer turn means that the resistance is reduced.

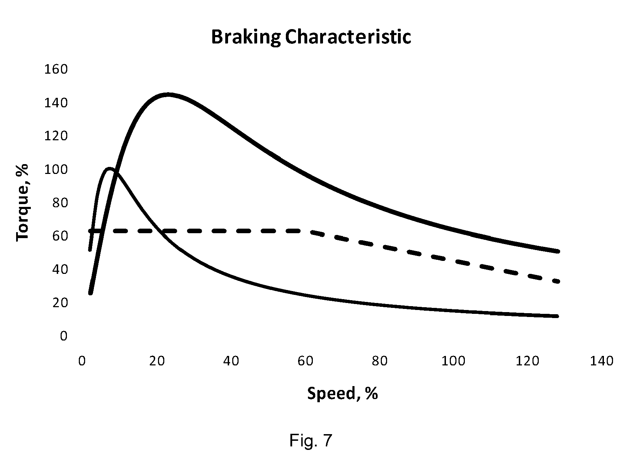

Figure 7 compares the braking characteristics obtained by applying a short circuit to complete coils (continuous fine line), graph 1, and to the inner sections (continuous thick line), graph 2, for one particular example. The corresponding turbine characteristic is shown as graph 3 (dotted line). It can be seen that the braking characteristic for the partial winding has a higher peak torque as well as being extended to higher speeds. This is a consequence of the changes to the emf and inductance resulting from the smaller dimensions of the inner coil section compared with the complete coil. The turbine is decelerated by the electrical brake to a speed of approximately 5.2% of rated speed. This may be sufficiently low for the parking brake to be applied. Closing switch B in the circuit of Figure 5 further reduces the speed to about 2.8% of rated.

One drawback of this embodiment in comparison with the first embodiment is that a smaller quantity of winding conductor is available for absorbing the heat developed as a result of absorbing the kinetic energy. The temperature rise of the short circuited section of the winding is higher but in many cases will be acceptable.

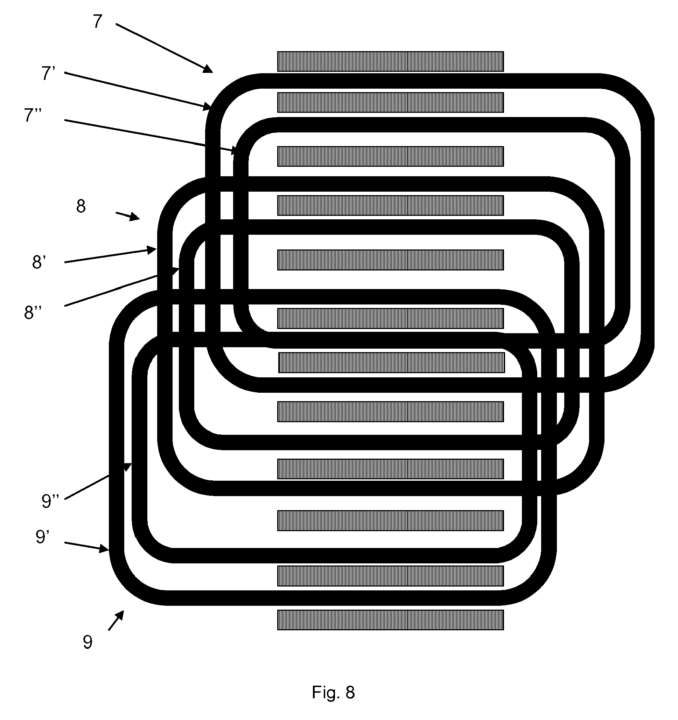

Figure 8 illustrates a third embodiment in which the armature winding is located within slots in a laminated stator. The winding may be of the usual polyphase configuration. In this case the winding is preferably of the concentric type in which each phase group of coils 7, 8, 9 comprises two or more coils 7', 7", 8', 8", 9', 9" nested within each other and occupying separate slots. It would be usual to connect the inner and outer coils within a phase band in series and then to connect the phase bands in series to create a complete phase winding. In the embodiment shown however, all of the inner coils 7", 8", 9" are connected in series to form the winding section that is used for braking and the outer coils 7', 8', 9' are connected in series to form the remaining part of the phase winding.

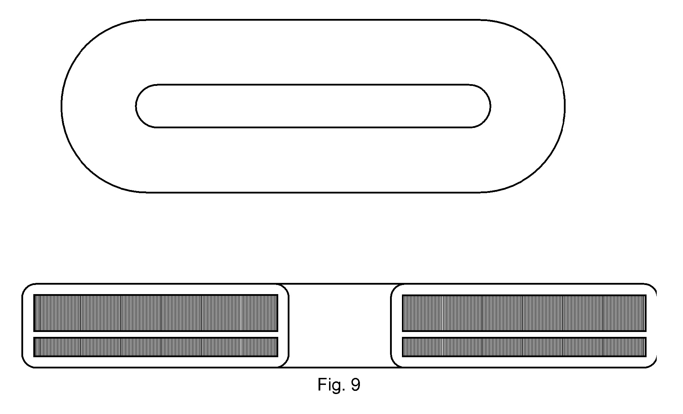

In yet another embodiment of the present invention where an airgap winding is used (see FIG 9), each armature winding coil of the electrical generator is formed with two sections. which are formed as two layers of the coil, respectively inner layer and outer layer, forming two winding paths that are connected in series for normal generator operation. Each section is a spiral coil of conductor strip, the thickness of said two layers may be the same or may be different. In the preferred embodiment the thickness of the layer that is used during high speed braking, - To - is less than thickness of the other layer - $T_l$ (To < $T_l$). This gives an additional braking torque in the braking process. For example a coil as the anofol type is formed of two layer strip. The two layers might be of different sections without significantly affecting the total loss during normal operation. Normally, a coil with a thickness of 10mm would have each layer 5mm thick making a total resistance proportional to 1/5+1/5=0,4. According to present embodiment of the invention the outer layer is made for example 4mm thick and the inner layer 6mm thick so that the resistance is proportional to1/4+1/6=0,416666. The difference of the said resistance compared with resistance of the normal coil where the layers have equal thickness is small, it can be said that there is hardly any difference. But during the braking the 4mm layer operating gives 25% higher braking torque than a 5mm layer.

The present invention involves according to the above described embodiments a method for braking the electrical generator with braking system where the method comprises a two steps braking process whereas in the first high speed braking step are applied a short circuit of the one conductor section of the armature winding coil, and when the electrical generator speed achieves a predetermined value the second step of the braking step are applied where a short circuit of the rest conductor section of the armature winding coil are created. It should be noted in addition that when the electrical generator operates in the normal operation mode the switching means provided for creating a short circuits of the conductor sections are opened and other switching means for connecting coils to the generator outputs are closed. However in case of the power failure of the electrical generator all switches will revert to the braking configuration. This enables to avoid the failure of the all systems and will prevent damages of the elements and arrangements of the electrical generator.

It should be understood by the person skilled in the art that the above description is given by explanation purposes and that the scope of the protection is sought in the accompanied claims.

**Claims**

1.  A braking system for a wind turbine comprising an electrical generator excited by permanent magnets, said electrical generator comprising armature winding made of coil (1) comprising at least two conductor sections (2, 2'), respectively inner section and outer section, that forms two or more winding paths that are connected together for normal generator operation and an arrangement of switches to create an electrical short circuit to selected conductor sections of the armature windings coil (1), whereas one end of the coil (1) is connected to one electrical generator output and other end of the coil (1) is connected to arrangements of switches, whereas the arrangement of switches is connected to outputs of the electrical generator.

2.  A braking system according to claim 1 in which the arrangement of the switches comprises at least three switching means (A, B, C) whereas output of the inner conductor section (2) and input of the input of the outer conductor section (2') are connected to the connection point of the switching means A and B, and the output of the outer conductor section (2') are connected to connection point of the switching means B and C.

3.  A braking system according to claim 1 in which the armature winding coil (1) conductor sections are composed from at least two parallel sub-conductors (4, 5) which are physically close to each other whereas one end of the sub-conductors (4, 5) are connected to electrical generator output and other end is connected to the arrangement of the switches and one or more of the sub-conductors is disconnected during operation of the brake.

4.  A braking system according to claim 1 and 3 in which the arrangement of the switches comprises at least four switching means (A, B, C, D) whereas the output of the one sub-conductor (4) is connected to the connection point of the switching means A and B, and the output of the second sub-conductor are connected to the connection point of the switching means C and D.

5.  A braking system according to claim 2 in which the output of the switching means A is connected to the one output of the electrical generator and the output of the switching means C are connected to the other output of the electrical generator.

6.  A braking system according to claim 4 in which the outputs of the switching means A and D are connected to the one output of the electrical generator and the outputs of the switching means B and C are connected to the other outputs of the electrical generator.

7.  A braking system according to claim 2 in which in the normal operation mode of the electrical generator the switching means C are closed and the switching means A and B are opened.

8.  A braking system according to claim 2 in which in the high speed braking operation the switching means C and B are opened and the switching means A are closed to create a short circuit of the inner conductor section (2) to brake the electrical generator speed to a predetermined value.

**9.** A braking system according to claim 8 in which when the speed of the electrical generator is reduced to a predetermined value the switching means B are closed to create a short circuit of the outer conductor section (2'), while the switching means C stay opened and switching means A stay closed, to brake the electrical generator.

**10.** A braking system according to claim 4 in which in the normal operation mode of the electrical generator the switching means B and C are closed and the switching means A and D are opened.

**11.** A braking system according to claim 4 in which in the high speed braking operation the switching means B and C are opened and the switching means A or D are closed to create a short circuit through one of the sub-conductors to brake the electrical generator speed to a predetermined value.

**12.** A braking system according to claim 11 in which when the speed of the electrical generator is reduced to a predetermined value the switching means D or A are closed respectively to create a short circuit through both sub-conductors to break electrical generator.

**13.** A braking system according to claims 1 in which the generator has an armature winding with polyphase configuration housed in slots in a laminated stator and of the concentric type in which each phase group of coils comprises two or more coils nested within each other and occupying separate slots where the inner coils of each phase band are used to form the section that is short circuited for braking polyphase configuration.

**14.** A braking system according to claim 1 in which the armature winding coil (1) comprising at least two sections, is formed with two layers, respectively inner layer and outer layer forming two winding paths that are connected in series for normal generator operation, whereas the thickness of the layers are different to achieve higher braking torque during the braking.

**15.** A braking system according to claim 14 in which the inner layer thickness is greater than the outer layer thickness, which will operate as short circuit in the high speed braking step.

**16.** A method for braking the electrical generator with braking system according to claims 1-13 comprising two steps braking process whereas

- in the first high speed braking step are applied a short circuit of the one conductor section of the armature winding coil, and

- when the electrical generator speed achieves a predetermined value the second step of the braking step are applied where a short circuit of the rest conductor section of the armature winding coil are created.

**17.** The method for braking the electrical generator according to the claim 16 whereas all switches will revert to the braking configuration in case of the power failure of the electrical generator.

**Braking Characteristic**

Fig. 1

**Braking Characteristic**

Fig. 2

## Braking Characteristic

Fig. 3

Fig. 4

Fig. 5

Fig. 6

Fig. 7

Fig. 8

Fig. 9

Europäisches
Patentamt

European
Patent Office

Office européen
des brevets

# EUROPEAN SEARCH REPORT

Application Number

EP 10 15 4736

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/086930 A2 (SOUTHWEST WINDPOWER INC [US]) 2 August 2007 (2007-08-02) | 1,7-12 | INV.<br>H02K3/28<br>H02K7/18<br>F03D7/02 |
| A | * paragraph [00020] *<br>* paragraph [00025] - paragraph [00033]; figures 1-6 * | 16 | |
| E | EP 2 200 170 A1 (OPENHYDRO IP LTD [IE]) 23 June 2010 (2010-06-23)<br>* paragraph [0007] - paragraph [0013] * | 1,16,17 | |
| A | EP 1 863 162 A2 (GEN ELECTRIC [US]) 5 December 2007 (2007-12-05)<br>* abstract * | 1,16 | |
| A | EP 1 734 650 A1 (SHINKO ELECTRIC CO LTD [JP]) 20 December 2006 (2006-12-20)<br>* paragraph [0016]; figure 2 * | 1,16 | |

TECHNICAL FIELDS
SEARCHED (IPC)

H02K
F03D
H02P

The present search report has been drawn up for all claims

| Place of search | Date of completion of the search | Examiner |
|---|---|---|
| The Hague | 22 September 2010 | Zanichelli, Franco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

## ANNEX TO THE EUROPEAN SEARCH REPORT
## ON EUROPEAN PATENT APPLICATION NO.

EP 10 15 4736

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2010

| Patent document cited in search report | | Publication date | Patent family member(s) | | Publication date |
|---|---|---|---|---|---|
| WO 2007086930 | A2 | 02-08-2007 | AU | 2006336347 A1 | 02-08-2007 |
| | | | CA | 2633616 A1 | 02-08-2007 |
| | | | CN | 101600882 A | 09-12-2009 |
| | | | EP | 1989775 A2 | 12-11-2008 |
| | | | JP | 2009523955 T | 25-06-2009 |
| | | | KR | 20080089641 A | 07-10-2008 |
| EP 2200170 | A1 | 23-06-2010 | NONE | | |
| EP 1863162 | A2 | 05-12-2007 | CN | 101087122 A | 12-12-2007 |
| | | | US | 2007279815 A1 | 06-12-2007 |
| EP 1734650 | A1 | 20-12-2006 | AU | 2005222229 A1 | 22-09-2005 |
| | | | CA | 2559569 A1 | 22-09-2005 |
| | | | CN | 1934780 A | 21-03-2007 |
| | | | JP | 2005269703 A | 29-09-2005 |
| | | | WO | 2005088828 A1 | 22-09-2005 |
| | | | KR | 20060130249 A | 18-12-2006 |
| | | | US | 2008191484 A1 | 14-08-2008 |

EPO FORM P0459

For more details about this annex : see Official Journal of the European Patent Office, No. 12/82